# EUROPEAN PATENT SPECIFICATION

(11) **EP 2 470 472 B1**
(45) Date of publication and mention of the grant of the patent: **01.04.2020**
(21) Application number: 10752912.5
(22) Date of filing: 25.08.2010
(51) Int. Cl.: C01B 32/05, B82Y 30/00, C03C 14/00, C04B 35/117, C04B 35/18, C04B 35/195, C04B 35/46, C04B 35/563, C04B 35/565, C04B 35/581, C04B 35/584, C04B 35/645, C04B 35/80, C04B 35/488, C04B 35/624, C04B 35/14

(54) **COMPOSITE MATERIALS CONTAINING ALIGNED NANOTUBES AND THE PRODUCTION THEREOF**
VERBUNDSTOFFE MIT AUSGERICHTETEN NANORÖHRCHEN UND IHRE HERSTELLUNG
MATÉRIAUX COMPOSITES CONTENANT DES NANOTUBES ALIGNÉS ET LEUR PRODUCTION

(30) Priority: 25.08.2009 GB 0914816
(43) Date of publication of application: 04.07.2012
(73) Proprietor: Oxford University Innovation Limited, Botley Oxford OX2 0JB (GB)
(72) Inventor: TODD, Richard, Ian, Oxford Oxfordshire OX1 3PH (GB); GROBERT, Nicole, Oxford Oxfordshire OX1 3PH (GB); OTIENO, Geoffrey, Oxford Oxfordshire OX1 3PH (GB)
(74) Representative: Mathys & Squire
(86) International application number: PCT/GB2010/051411
(87) International publication number: WO 2011/024000

(56) References cited:
- WO-A1-2006/080936
- JOHANN CHO, ALDO R. BOCCACCINI AND MILO S. P. SHAFFER: "Ceramic matrix composites containing carbon nanotubes" JOURNAL OF MATERIAL SCIENCE, vol. 44, no. 8, 28 February 2009 (2009-02-28), pages 1934-1951, XP002607137 DOI: 10.1007/s10853-009-3262-9
- Z. F. REN, ET AL: "Synthesis of Large Arrays of Well-Aligned Carbon Nanotubes on Glass" SCIENCE, vol. 282, no. 5391, 6 November 1998 (1998-11-06), pages 1105-1107, XP002607138 DOI: 10.1126/science.282.5391.1105
- A. CHANDRASHEKAR, S. RAMACHANDRAN, G. POLLACK, J.S. LEE, G. LEE AND L. OVERZET,: "Forming carbon nanotube composites by directly coating forests with inorganic materials using low pressure chemical vapour deposition," THIN SOLID FILMS, vol. 517, no. 2, 25 June 2008 (2008-06-25) , pages 525-530, XP002607262 DOI: 10.1016/j.tsf.2008.06.064
- A. PEIGNEY ET AL.: "Aligned carbon nanotubes in ceramic-matrix nanocomposites prepared by high-temperature extrusion" CHEMICAL PHYSICS LETTERS, vol. 352, no. 1-2, 24 January 2002 (2002-01-24), pages 20-25, XP002607139 DOI: 10.1016/S0009-2614(01)01441-5

## Description

### Field of the Disclosure

This disclosure relates to ceramic composite materials comprising nanotubes and methods for their production. In particular, a method for producing a ceramic composite material comprising an array of substantially aligned nanotubes is disclosed.

### Background to the Disclosure

Carbon nanotube (CNT) reinforced composite materials are currently receiving much attention due to interest in the mechanical, electrical and thermal properties of carbon nanotubes. Of particular interest is the development of CNT/ceramic composites which combine the high tensile strength, high thermal conductivity and high electrical conductivity of carbon nanotubes with the high stiffness, excellent thermostability and relatively low density of ceramics. Of particular interest is the potential improvement to the toughness of the ceramic matrix by the addition of carbon nanotubes. Development to date has been concerned mainly with short CNT fibre composites.

CNT/ceramic composite materials have been fabricated using a solution process comprising steps of: producing carbon nanotubes; dispersing the nanotubes in a solvent; mixing the nanotube dispersion with ceramic powders; and forming and sintering the material to produce the ceramic matrix composite. Examples of reported composite materials include alumina/CNT (Peigney, 2003, Nature materials, 2, 15-16); borosilicate glass/CNT (Chu et at, 2008, Journal of Materials Chemistry, 18, 5344-5399) and silicon carbide/CNT (Ma et at, 1998, Journal of Materials Science, 33, 5243-5246). However, the randomly oriented, discontinuous arrangement of the carbon nanotubes in the composite has been found to result in a relatively poor thermal conductivity. For example, a 15 wt% CNT/alumina composite has been reported to have a thermal conductivity of about 1 1 W/mk at room temperature (Zhan et al, 2004, International Journal of Applied Ceramic Technology, 1 (2), 161-171). In addition, damage and agglomeration of the carbon nanotubes has been a problem with these methods, particularly where the nanotube content is greater than about 5 wt%. Problems with porosity are also seen. Interfaces between the carbon nanotubes and the matrix have also been found to exhibit low conductivity.

Since carbon nanotubes conduct heat very well along their length, improved thermal performance may be obtained by ensuring that the nanotubes are aligned and continuous in the ceramic matrix. Thus, in an attempt to improve thermal performance, efforts have been made to produce composite materials comprising aligned carbon nanotubes (ACNTs). Carbon nanotubes may have a thermal conductivity of up to 3000 VWmK and may be stable in air at temperatures of up to 550 °C. Arranging carbon nanotubes in a ceramic matrix in a collinear aligned manner should result in a composite material having axial thermal properties which are greatly improved compared with existing materials.

However, there are difficulties in producing ceramic matrix composites comprising aligned carbon nanotubes from aligned nanotube preforms. This is because the spacing between the nanotubes is very small (e.g. less than 500 nm) and conventional ceramic processing techniques (e.g. powder processing techniques) cannot be used to introduce powder to fill the interstitial spaces because the powder particles are of similar size to, or larger than, the spaces to be filled. Methods used to date for the production of aligned CNT composite materials include high temperature extrusion (Peigney et al, 2002, Chemical Physics Letters, 352, 20-25); in situ growth of CNTs in anodic alumina (Xia et al, 2008, Scripta Matehalia, 58, 223-226); electrophoretic deposition from a ceramic/CNT solution (Boccaccini et al, 2006, Carbon, 44, 3149-3160); and low pressure vapour deposition of a ceramic precursor in the interstitial spaces of pre-aligned CNTs (Chandrashekar et al, 2008, Thin Solid Films, 517, 525-530). However, improvements could be made with respect to these methods, in particular in relation to reducing damage to the CNTs. Also, many of the techniques described require pretreatment of the surface of the CNTs, giving rise to greater complexity of the method of fabrication, as well as in some cases a reduction in the mechanical and/or thermal properties of the resulting composite material.

"Ceramic matrix composites containing carbon nanotubes", Journal of Material Science, Vol. 44, no.8, 28 February 2009, pages 1934-1951 reviews the current status of the research and development of carbon nanotube-loaded ceramic matrix composite (CMC) materials.

WO 2006/080936 discloses a composite material featuring nanotubes comprising a matrix featuring metal, glass, ceramic and/or polymer.

### Summary of the Invention

According to the present invention, there is provided a method and composite materials according to the appended claims.

### Brief Description of the Drawings

Figure 1 shows schematically an apparatus for the formation of an array of aligned carbon nanotubes.
Figure 2 is a scanning electron micrograph of an array of aligned carbon nanotubes.
Figure 3 shows schematically an array of aligned carbon nanotubes.
Figure 4 shows schematically an array of carbon nanotubes being infiltrated with a sol.
Figure 5 shows schematically a composite material obtained after sintering.

### Description of Various Embodiments of the Disclosure

The present disclosure provides a method of forming a composite material which comprises nanotubes oriented in a matrix comprising a ceramic material. According to a method of the present disclosure, an array of nanotubes is provided in which the nanotubes are substantially aligned. Thus, as will be understood by those skilled in the art, the array of nanotubes may take the form of a "carpet" of substantially aligned nanotubes. Advantageously, a method of the present disclosure allows the orientation of the nanotubes to be substantially preserved during the fabrication of the composite material.

The nanotube array is typically grown on a surface of a substrate. Thus, in an embodiment of the disclosure, the array of nanotubes is present on a surface of a substrate. In a particular embodiment, the nanotubes extend substantially perpendicular, e.g. generally perpendicular, to a surface of a substrate. The substrate may form part of the resulting composite material or may be removed prior to, during or after fabrication of the material. In an embodiment, the array of nanotubes is freestanding such that the method may be performed in the absence of a substrate. In an embodiment, the array of nanotubes is arranged substantially perpendicular or substantially parallel to a surface of a substrate, and optionally contacts said surface of the substrate. In an embodiment, the method is performed using a plurality of nanotube arrays. In a particular embodiment, first and second nanotube arrays are provided in which the nanotubes of the first array are arranged substantially parallel or substantially perpendicular to the nanotubes of the second array.

In an embodiment, the nanotubes comprise carbon nanotubes. The carbon nanotubes may be in any appropriate form. For example, the carbon nanotubes may be selected from single-walled carbon nanotubes, multi-walled carbon nanotubes, boron-doped carbon nanotubes, nitrogen-doped carbon nanotubes and metal-filled carbon nanotubes, e.g. Fe-filled carbon nanotubes. In a particular embodiment, the nanotubes comprise multi-walled carbon nanotubes. Other nanotubes or nanotube-like structures may also be used. In particular, inorganic nanotubes, e.g. made from WS₂, MoS², BN or BₓC_{y}N_{z}, may be utilised. The array of nanotubes may be formed by, for example, chemical vapour deposition (CVD).

In an embodiment, the spacing between the nanotubes is less than about 500 nm, for example less than 400 nm, e.g. less than 300 nm, e.g. less than 200 nm, e.g. less than 100 nm.

The nanotubes may be of the appropriate length having regard to the composite material to be formed. In an embodiment, the length of the nanotubes is of the order of microns, millimetres or centimetres. In an embodiment, the length of the nanotubes is greater than about 2 mm, for example greater than about 3 mm, for example greater than about 4 mm, for example greater than about 7 mm.

A ceramic matrix material in the form of a solution is applied to the array of nanotubes. Prior to this step, the nanotubes may be reduced or shaped as desired. In some instances, a surface treatment or other preparation step may be carried out prior to application of the solution. For example, carbon nanotubes may be subjected to a high temperature heat treatment to encourage graphitisation of the nanotubes, thereby reducing defect density and enhancing the thermal properties of the resulting material. The nanotubes may be modified by application of a coating or other surface treatment, for example in order to improve wetting of the nanotubes with the matrix material. In an embodiment, the nanotubes are modified to include acid or ester groups.

Preferably, no further processing of the nanotubes is performed between their formation and the application of the solution. Thus, the solution may be applied directly to the surface of the nanotubes as grown. In this way, the problems associated with the agglomeration of carbon nanotubes may be mitigated and the alignment of the nanotubes may be substantially preserved.

The ceramic matrix may comprise any appropriate matrix material. In an embodiment, the ceramic matrix comprises an oxide matrix, for example an alumina, silica or an aluminosilicate, *e.g.* calcium aluminosilicate, matrix. Other examples of ceramic matrices include silicon carbide, silicon nitride, boron carbide and aluminium nitride. In an embodiment, the ceramic matrix comprises a glass. In a particular embodiment, the matrix comprises a sodium aluminoborosilicate glass. Other examples of ceramic matrix materials include potassium, calcium, and/or magnesium aluminoborosilicate glass.

The ceramic matrix is preferably formed by a sol-gel process. Thus, the ceramic matrix solution may be provided in the form of a sol. For the filling of the interstitial spaces, particularly those which are less than about 500 nm, it may not be possible to use normal ceramic powder processing routes because the powders are of a similar size to, or larger than, the interstitial spaces. Sol-gel processing has been found to provide a route to fabricating aligned carbon nanotube/ceramic composites. The use of a sol-gel route may also eliminate the common functionalisation and dispersion steps which are employed in conventional manufacturing techniques.

The sol may be prepared using any appropriate method, for example by condensation of a solution of precursors. In a particular embodiment, the sol is an aluminoborosilicate sol. Techniques for preparing aluminoborosilicate sols are known in the art (see *e.g*. Chiou et al, 1994, Journal of American Ceramics Society, 77 (1), 155-160). The sol may be formed by hydrolysis and condensation of a solution of precursors, for example orthosilicate and alumina precursors to form an aluminosilicate glass matrix composite. In a particular embodiment, the aluminoborosilicate sol produces a glass composition of 81 wt% SiO₂, 13 wt% B₂O₃, 4 wt% Na₂O and 2 wt% Al₂O₃; or 63 wt% SiO₂, 24 wt% Al₂O₃, 10 wt% B₂O₃ and 3 wt% Na₂O.

Other sol compositions may be used. For example, an alumina matrix may be produced using a sol formed from: (i) aluminium sec-butoxide (ASB; Al(OC₄H₉)₃), as an alumina precursor; (ii) nitric acid in an amount of about 0.03 to 0.2 mole/mole ASB, as an electrolyte; and (iii) glycerol in an amount of approximately 10 wt%, as a complexing agent. Further examples of sols include titanium dioxide (TiO₂) and zirconia (ZrO₂). It will be understood that other materials may be used to form the matrix material.

In an embodiment, the sol is a colloidal suspension having a particle size of about 1 to 10 nm. The use of such a suspension may be advantageous in terms of ease of wetting and infusion of the material into the interstitial spaces of the nanotube array.

In an embodiment, the ceramic matrix solution comprises a silicon-containing material. Without wishing to be bound by theory, it is thought that the presence of a silicon-containing material in the sol can improve wetting of the nanotubes. Where a sol comprises a silicon-containing material, functionalisation of the surface of the nanotubes may not be required prior to infiltration. As a consequence, desirable reinforcement/matrix interface properties may be obtained.

The step of applying the solution to the nanotubes may comprise dipping the array of nanotubes into a bath of the solution such that a portion of each nanotube is immersed in the solution. Preferably less than 50%, less than 40%, less than 30% or less than 20% of the tube length is immersed in the solution. Without wishing to be bound by theory, it is thought that minimising the length immersed in the solution reduces the risk of air becoming trapped in the nanotube/sol structure. The nanotubes may be immersed further, but in this case it may be preferable to immerse the nanotubes gradually in order to allow any trapped air to be released. Preferably the nanotube array is dipped in a vertical orientation into a bath such that the infiltration occurs by capillary action against gravity, further reducing the risk of trapped air.

Methods other than dipping may also be used. For example, the solution may be applied to a surface of the array, *e.g*. by sprinkling, spraying, drop casting, and/or spin casting. Other methods such as vacuum infiltration or pressure infiltration may also be used.

In an embodiment, the method further comprises a step of gelling the ceramic matrix solution prior to the sintering step. In an embodiment, the method further comprises a step of drying the ceramic matrix material prior to the sintering step. In an embodiment, the method further comprises a step of applying further matrix solution to the nanotubes after gelling or drying, before the sintering step. In this way, a greater amount of the matrix material can be included, thereby enhancing the density of the composite material. In an embodiment, pressure is applied to the infiltrated material during subsequent processing in order to reduce porosity.

After the sol has infiltrated the array of nanotubes, the sol is subjected to a gelation step to form a gel and then dried. By way of illustration, the material may be dried by vacuum drying, to remove solvents such as alcohol and water, followed by high temperature drying (for example at 450 °C) to remove organics and to form an aerogel. Sintering may then carried out to form the ceramic in accordance with techniques known in the art.

In a preferred embodiment, the method is used to prepare continuous aligned carbon nanotube-aluminoborosilicate glass composites by a sol-gel route. In this case, the method comprises producing an array of aligned carbon nanotubes using an aerosol CVD method, followed by infiltration of the nanotubes with an aluminoborosilicate sol. The sol is then gelled and converted to an aluminoborosilicate glass within the interstitial spaces of the nanotubes array.

The disclosure further provides a composite material prepared by a method described herein. In a preferred embodiment of the disclosure, the composite material comprises nanotubes which extend substantially continuously through the material.

In particular, the material may be in the form of a composite material element comprising a matrix comprising a ceramic material and an array of nanotubes in the matrix, the nanotubes of the array being substantially aligned and extending substantially continuously across a dimension of the element. In an embodiment, at least some, preferably the majority, of the nanotubes extend all of the way across the formed composite element. In this way, enhanced thermal and/or other properties of the composite may be obtained. Individual elements may be joined to form larger elements. The material may comprise other materials, for example other reinforcing elements, in addition to the nanotubes.

The volume fraction of the nanotubes of the array is preferably at least 5%, preferably at least 10%. In an embodiment, the volume fraction is at least 40%, for example at least 50%. The volume fraction may be increased by mechanically pressing the composite material to occupy a smaller volume. In this way, for example, a volume fraction of about 10% may be increased to 42%.

In an embodiment, the density of the composite material is greater than 50%, preferably greater than 60%. In an embodiment, the array of nanotubes is at least 10% dense, and the resulting composite material is at least 60% dense.

In an embodiment, the composite material is pressed by hot pressing in order to increase the density of the material. For example, the use of hot pressing may result in a composite material having a density of greater than about 80%, for example greater than about 90%. Other methods such as spark plasma sintering may also be used.

In an embodiment, the thermal conductivity of the material in a direction substantially along the length of the nanotubes is at least 5 W/mK, preferably at least 10 W/mK, preferably at least 15 W/mK. The materials may find application as, for example, thermal interface materials.

Preferred features of the present disclosure will now be described, purely by way of example, with reference to the accompanying drawings.

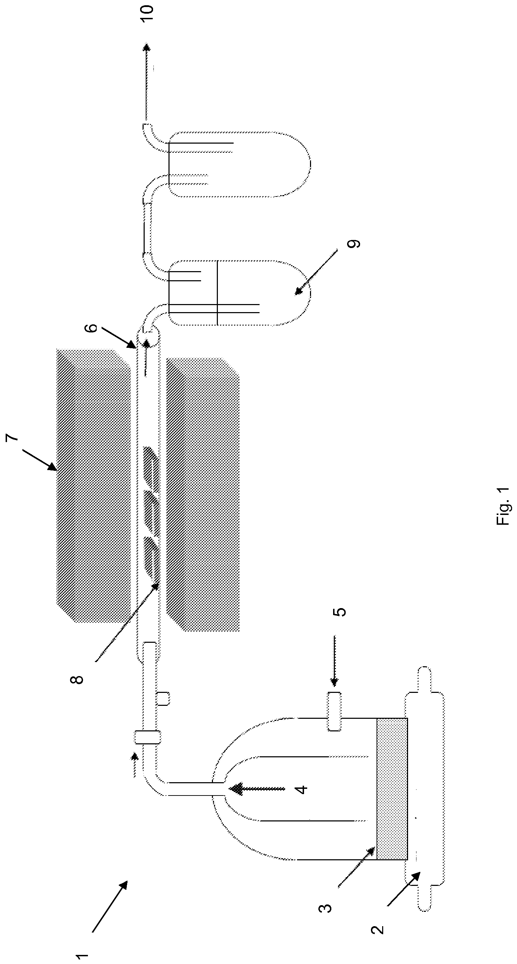

Figure 1 shows an apparatus 1 for forming aligned carbon nanotubes using aerosol assisted CVD (see Koós et al, 2009, Carbon, 47, 30-37). The apparatus includes a piezoelectric generator or motor 2, arranged for forming an atomised solution from a carbon source solution 3. The atomised solution is carried through a quartz tube 4 using a carrier gas, for example argon, provided at carrier gas input 5. The aerosol is passed to a horizontal tube 6 mounted in a furnace 7, in which quartz substrates 8 are arranged. The temperature of the furnace may be, for example, about 800 °C. The flow through the apparatus is controlled using a gas flow controller at the carrier gas input 5. An acetone gas trap 9 is provided at the outlet of the furnace, upstream of the output 10 from the apparatus to a chimney. During the process, aligned carbon nanotubes form on the surface of the quartz substrates 8. By varying the duration of the process and/or the gas flow rate, nanotubes of different lengths can be formed.

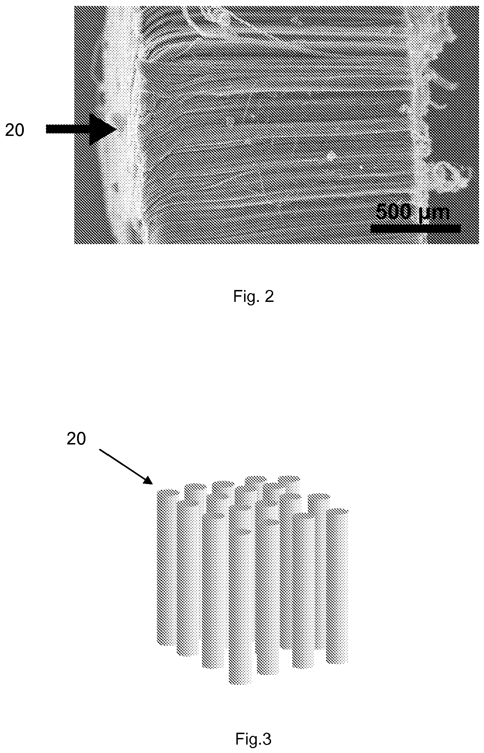

Figure 2 is a scanning electron micrograph of an array of aligned carbon nanotubes 20 as grown by the process illustrated in Figure 1. The nanotubes can be seen to form a "carpet" structure, in which the nanotubes are aligned substantially in parallel. In the example shown, the density of the nanotube carpet ranges from about 0.95 to 1.5 g/cm³ with a carbon nanotube volume fraction of about 10%.

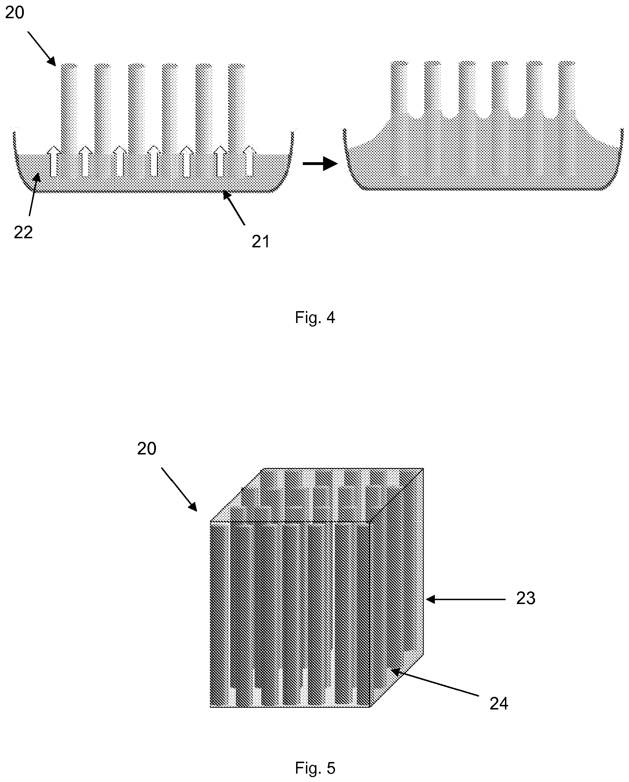

Figure 3 depicts an array of substantially aligned carbon nanotubes 20. As shown in Figure 4, a sol may be applied to the array of nanotubes 20 by placing the nanotubes substantially vertically above a bath 21 comprising a sol 22 and dipping a portion of each nanotube into the sol. In the example shown, about one fifth of the length of the nanotubes is immersed in the sol 22. The sol infiltrates into the interstitial spaces between the nanotubes by capillary action. In practice, it has been found that the sol infiltrates the full length of the nanotube array as the sol is seen at the top of the nanotubes away from the bath.

The sol is left to gel and dry within the interstitial spaces of the nanotube array. Optionally, the infiltration step may be repeated for the dried sample using the sol in order to improve infiltration of the sol. Since different drying rates can lead to warping and cracking of the infiltrated material, drying of the material is preferably controlled. This may be achieved by drying the material in the open or in a desiccator. Other methods which may be used include vacuum drying, freeze drying and supercritical drying. The dried material is then sintered to give a composite material 23 comprising the aligned carbon nanotubes 20 in ceramic matrix 24, as shown schematically in Figure 5.

The methods disclosed herein may also be applicable to the production of non-ceramic matrix materials, for example metals or alloys. In particular, the present disclosure also provides a method of forming a composite material comprising nanotubes oriented in a matrix comprising a non-polymeric material, the method comprising the steps of: providing an array of substantially aligned nanotubes; providing a matrix material in the form of a solution; applying the solution to the nanotubes; allowing the solution to infiltrate into the array of nanotubes; and treating the matrix material to form the composite material, wherein the nanotubes are substantially aligned in the matrix. Also disclosed is a method of forming a composite material comprising substantially aligned nanotubes, in which a matrix material is infiltrated into an array of nanotubes by capillary action, the matrix material being treated to form the matrix of the composite. It is also envisaged that the methods disclosed herein could be used in the fabrication of composite materials comprising aligned elongate members other than nanotubes, for example aligned fibres.

The following non-limiting Example illustrates the present disclosure.

### Example

Aligned carbon nanotube-aluminoborosilicate glass (ACNT-ABS) glass composite materials were produced in line with the process illustrated in the Figures herein.

Vertically aligned CNTs were grown on 20 mm by 10 mm quartz substrates by aerosol CVD. A solution of 5 wt% ferrocene (iron catalyst precursor; Aldrich 98%) in toluene was used as the carbon source solution and a 2.1 MHz atomiser was used to produce the mist/aerosol. The duration of the process was 8 hours, producing nanotubes having a length of about 4.4 mm.

A sodium ABS sol was prepared based upon the method described by Chiou *et al* (*supra*)*.* The method involved: (i) preparing Solution A by: mixing 4.7 ml of ethanol with 1 ml of water in a beaker using a magnetic stirrer for 1 minute; adding 0.1 ml of concentrated nitric acid to the solution and mixing for a further 1 minute; adding trimethyl borate solution dropwise into the solution and mixing for 1 minute; and adding 2 ml of 2 molar sodium acetate to the solution and mixing for 1 minute with a magnetic stirrer to give a clear solution; (ii) preparing Solution B by mixing 4.7 ml of tetraethyl orthosilicate (TEOS) with 2.5 ml aluminium tri-sec-butoxide at 60 °C for 5 minutes to give a clear solution; and (iii) adding Solution B dropwise to Solution A with stirring while the pH of the solution is maintained at 3 using nitric acid, to give a clear solution. The resulting solution was a sodium aluminoborosilicate (ABS) sol expected to give a glass composition containing 63 wt% SiO₂, 24 wt% Al₂O₃, 10 wt% B₂O₃ and 3 wt% Na₂O.

After the sol had infiltrated the array of nanotubes, the sol was left to gel and dry at room temperature for about 12 hours. The gelled material was further dried at 350 °C in air for 3 hours to remove organics. Improved infiltration was achieved by repeating the infiltration step until there was no further weight increase in the sample on further infiltration. In some instances, four infiltration steps were carried out. The dried samples were sintered at 900 °C in an argon atmosphere to give the ACNT-ABS glass composite material.

Good wetting of the tubes was observed and it could be seen that the sol has infiltrated into the interstitial spaces of the carbon nanotubes. The density of the composite material was about 1 g/cm³, or about 60% dense. On fracture, good alignment of the carbon nanotubes was observed in the ABS matrix and large numbers of nanotube pull outs were seen accompanied by holes. Good adhesion of the carbon nanotubes onto the ABS matrix was also seen.

A laser flash method was employed to measure the thermal diffusivity of the ACNT, ACNT-ABS composite and ABS glass materials. Measurements were performed on 1.5 mm thick samples and in the axial direction of the ACNT and ACNT-ABS materials. NIST Stainless Steel:1461 and Poco Graphite AXM 5Q1 of thermal diffusivity 0.037 and 0.74 cm²/s were used to calibrate the instrument. Thermal conductivities of the materials were calculated using the equation K=αρcₚ, where α is the thermal diffusivity, ρ is the density and cₚ is the specific heat capacity obtained by differential scanning calorimetery. Table 1 provides a summary of the thermal properties of the ACNT, ACNT-ABS and ABS materials obtained at 25 °C.

**Table 1**

| | ACNT-ABS composite | ACNT carpet | ABS glass |
|---|---|---|---|
| Thermal diffusivity α (cm²/s) | 0.1340 | 0.4444 | 0.0065 |
| Thermal conductivity K (W/mK) | 15.75 | 8.72 | 1.22 |
| Specific heat capacity (J/g°C) | 1.87 | 1.76 | 0.82 |

It should be noted that the thermal diffusibility of the composite material is comparable to that of Al₂O₃ (0.14 cm²/s), which is a standard ceramic filler used in phase changing thermal interface materials.

The axial thermal conductivity of the composite was 15.75 W/mK, which is an improvement of 180% and 1290% relative to the conductivity of the ACNT and ABS materials respectively. Compared with the currently available commercial thermal interface materials, e.g. phase changing thermal interface materials whose thermal conductivities are in the range of 3 to 5 W/mK, the thermal conductivities of the ACNT-ABS samples tested were three times better even though they are only 60% dense.

Raman spectroscopy showed that there was a relatively low defect density in the carbon nanotubes even after the sol-gel processing and sintering. Without wishing to be bound by theory, it is believed that a low defect density is advantageous because it leads to improved thermal conductivity compared with carbon nanotubes having a high defect density. This is because the defects can act as scattering sites for phonons due to the interrupted π conjugation system.

In summary, the method described above is an effective way of infiltrating aligned carbon nanotubes with a ceramic matrix material compared to previously proposed techniques such as templating, electrophoretic deposition and CVD techniques.

It will be understood that the present disclosure has been described above purely by way of example, and modification of detail can be made within the scope of the disclosure. Each feature disclosed in the description and, where appropriate, the claims and drawings may be provided independently or in any appropriate combination. Any feature in one aspect of the disclosure may be applied to other aspects of the disclosure, in any appropriate combination. In particular, method aspects may be applied to product aspects, and vice versa.

## Claims

1. A method of forming a composite material comprising nanotubes oriented in a matrix comprising a ceramic material, the method comprising the steps of:
providing an array of substantially aligned nanotubes, wherein the nanotubes comprise carbon nanotubes;
providing a ceramic matrix material in the form of a solution;
applying the solution to the nanotubes;
allowing the solution to infiltrate into the array of nanotubes; and
sintering the ceramic matrix material to form the composite material, wherein the nanotubes are substantially aligned in the ceramic matrix, wherein the ceramic matrix is formed by a sol-gel process.

2. A method according to claim 1, wherein the nanotubes are formed by chemical vapour deposition (CVD).

3. A method according to any preceding claim, wherein the length of the nanotubes is greater than 2 mm, for example greater than 3 mm, for example greater than 4 mm, for example greater than 7 mm.

4. A method according to any preceding claim, wherein the ceramic matrix comprises a glass.

5. A method according to any preceding claim, wherein the solution comprises a silicon-containing material.

6. A method according to any preceding claim, wherein the step of applying the solution to the nanotubes comprises dipping the array of nanotubes into a bath of the solution such that a portion of each nanotube is immersed in the solution.

7. A method according to any preceding claim, the method further comprising gelling and/or drying the ceramic matrix solution prior to the sintering step; and optionally applying further matrix solution to the nanotubes after said gelling and/or drying, prior to the sintering step.

8. A method according to any preceding claim, wherein the nanotubes are formed on a substrate and extend substantially perpendicular to a surface of the substrate.

9. A method according to any preceding claim, wherein a plurality of nanotube arrays is provided.

10. A composite material obtainable by a method of any preceding claim, wherein the material comprises carbon nanotubes with a length of greater than 2 mm which extend substantially continuously through the material; and wherein the material is a matrix comprising a ceramic material and an array of carbon nanotubes in the matrix, wherein the carbon nanotubes are substantially aligned and extend substantially continuously across a dimension of the element.

11. A composite material according to claim 10, wherein the density of the composite material is greater than 50%, for example greater than 60%, for example greater than 80%, for example greater than 90%.

12. A composite material according to claim 10 to 11, wherein the volume fraction of nanotubes in the material is at least 5%, for example at least 10%.

## Patentansprüche

1. Ein Verfahren zur Bildung eines Verbundmaterials, das Nanoröhrchen beinhaltet, die in einer Matrix ausgerichtet sind, die ein Keramikmaterial beinhaltet, wobei das Verfahren die folgenden Schritte beinhaltet:
Bereitstellen einer Anordnung von im Wesentlichen ausgerichteten Nanoröhrchen, wobei die Nanoröhrchen Kohlenstoff-Nanoröhrchen beinhalten;
Bereitstellen eines Keramikmatrixmaterials in Form einer Lösung;
Applizieren der Lösung auf die Nanoröhrchen;
Eindringenlassen der Lösung in die Anordnung von Nanoröhrchen; und
Sintern des Keramikmatrixmaterials, um das Verbundmaterial zu bilden, wobei die Nanoröhrchen im Wesentlichen in der Keramikmatrix ausgerichtet sind, wobei die Keramikmatrix durch einen Sol-Gel-Prozess gebildet wird.

2. Verfahren nach Anspruch 1, wobei die Nanoröhrchen durch Abscheiden aus der Gasphase (CVD) gebildet werden.

3. Verfahren nach einem vorhergehenden Anspruch, wobei die Länge der Nanoröhrchen mehr als 2 mm beträgt, zum Beispiel mehr als 3 mm, zum Beispiel mehr als 4 mm, zum Beispiel mehr als 7 mm.

4. Verfahren nach einem vorhergehenden Anspruch, wobei die Keramikmatrix ein Glas beinhaltet.

5. Verfahren nach einem vorhergehenden Anspruch, wobei die Lösung ein siliziumhaltiges Material beinhaltet.

6. Verfahren nach einem vorhergehenden Anspruch, wobei der Schritt des Applizierens der Lösung auf die Nanoröhrchen das Eintauchen der Anordnung von Nanoröhrchen in ein Bad der Lösung beinhaltet, sodass ein Anteil jedes Nanoröhrchens in die Lösung eingetaucht ist.

7. Verfahren nach einem vorhergehenden Anspruch, wobei das Verfahren ferner das Gelieren und/oder Trocknen der Keramikmatrixlösung vor dem Sinterschritt beinhaltet; und optional das Applizieren weiterer Matrixlösung auf die Nanoröhrchen nach dem genannten Gelieren und/oder Trocknen vor dem Sinterschritt.

8. Verfahren nach einem vorhergehenden Anspruch, wobei die Nanoröhrchen auf einem Träger ausgebildet sind und sich im Wesentlichen im rechten Winkel zu einer Oberfläche des Trägers erstrecken.

9. Verfahren nach einem vorhergehenden Anspruch, wobei eine Vielzahl von Nanoröhrchenanordnungen bereitgestellt wird.

10. Ein Verbundmaterial, das nach einem Verfahren nach einem vorhergehenden Anspruch erhalten wurde, wobei das Material Kohlenstoff-Nanoröhrchen mit einer Länge von mehr als 2 mm beinhaltet, die sich im Wesentlichen fortlaufend durch das Material erstrecken; und wobei das Material eine Matrix ist, die ein Keramikmaterial und eine Anordnung von Kohlenstoff-Nanoröhrchen in der Matrix beinhaltet, wobei die Kohlenstoff-Nanoröhrchen im Wesentlichen ausgerichtet sind und sich im Wesentlichen fortlaufend über eine Abmessung des Elements erstrecken.

11. Verbundmaterial nach Anspruch 10, wobei die Dichte des Verbundmaterials mehr als 50%, zum Beispiel mehr als 60%, zum Beispiel mehr als 80%, zum Beispiel mehr als 90% beträgt.

12. Verbundmaterial nach Anspruch 10 bis 11, wobei der Volumenanteil von Nanoröhrchen in dem Material mindestens 5%, zum Beispiel mindestens 10% beträgt.

## Revendications

1. Procédé de formation d'un matériau composite comprenant des nanotubes orientés dans une matrice comprenant un matériau céramique, le procédé comprenant les étapes consistant à :
fournir un réseau de nanotubes substantiellement alignés, dans lequel les nanotubes comprennent des nanotubes de carbone ;
fournir un matériau à matrice céramique sous la forme d'une solution ;
appliquer la solution aux nanotubes ;
laisser la solution s'infiltrer jusque dans le réseau de nanotubes ; et
fritter le matériau à matrice céramique pour former le matériau composite, dans lequel les nanotubes sont substantiellement alignés dans la matrice céramique, dans lequel la matrice céramique est formée par un procédé sol-gel.

2. Procédé selon la revendication 1, dans lequel les nanotubes sont formés par dépôt chimique en phase vapeur (DCV) .

3. Procédé selon l'une quelconque des revendications précédentes, dans lequel la longueur des nanotubes est supérieure à 2 mm, par exemple supérieure à 3 mm, par exemple supérieure à 4 mm, par exemple supérieure à 7 mm.

4. Procédé selon l'une quelconque des revendications précédentes, dans lequel la matrice céramique comprend un verre.

5. Procédé selon l'une quelconque des revendications précédentes, dans laquelle la solution comprend un matériau contenant du silicium.

6. Procédé selon l'une quelconque des revendications précédentes, dans lequel l'étape d'application de la solution aux nanotubes comprend le trempage du réseau de nanotubes dans un bain de la solution de sorte qu'une partie de chaque nanotube est immergée dans la solution.

7. Procédé selon l'une quelconque des revendications précédentes, le procédé comprenant en outre la gélification et/ou le séchage de la solution de matrice de céramique avant l'étape de frittage ; et facultativement l'application d'une solution de matrice supplémentaire aux nanotubes après ladite gélification et/ou ledit séchage, avant l'étape de frittage.

8. Procédé selon l'une quelconque des revendications précédentes, dans lequel les nanotubes sont formés sur un substrat et s'étendent substantiellement perpendiculaires à une surface du substrat.

9. Procédé selon l'une quelconque des revendications précédentes, dans lequel une pluralité de réseaux de nanotubes sont fournis.

10. Matériau composite pouvant être obtenu par un procédé selon l'une quelconque des revendications précédentes, dans lequel le matériau comprend des nanotubes de carbone ayant une longueur supérieure à 2 mm qui s'étendent de manière substantiellement continue à travers le matériau ; et dans lequel le matériau est une matrice comprenant un matériau céramique et un réseau de nanotubes de carbone dans la matrice, dans lequel les nanotubes de carbone sont substantiellement alignés et s'étendent substantiellement de manière continue sur une dimension de l'élément.

11. Matériau composite selon la revendication 10, dans lequel la densité du matériau composite est supérieure à 50 %, par exemple supérieure à 60 %, par exemple supérieure à 80 %, par exemple supérieure à 90 %.

12. Matériau composite selon la revendication 10 à 11, dans lequel la fraction volumique des nanotubes dans le matériau est d'au moins 5 %, par exemple d'au moins 10 %.
